# EUROPEAN PATENT APPLICATION

(11) **EP 4 848 125 A1**
(43) Date of publication of application: **02.12.2026**
(21) Application number: 26179825.0
(22) Date of filing: 20.05.2026
(51) Int. Cl.: G06F 21/60, G06F 3/12

(54) **IMAGE FORMING APPARATUS AND CONTROL METHOD FOR IMAGE FORMING APPARATUS**

(30) Priority: 30.05.2025 JP 2025091028
(71) Applicant: Sharp Kabushiki Kaisha, Sakai City, Osaka 590-8522 (JP)
(72) Inventor: NAGATOMI, Takaya, Osaka, 590-8522 (JP)
(74) Representative: Müller Hoffmann & Partner

(57) **Abstract**

There is provided an image forming apparatus including a printing function of storing received print data in a folder generated based on identification information added to the print data and performing printing of the print data based on a print instruction from an operator, the image forming apparatus including a storage that stores type information of an authority of the operator with respect to the image forming apparatus; and a controller that controls an operation related to the printing function, wherein the controller determines, based on the type information, whether a type of authority of the operator is user authority or administrator authority, and operates the printing function by setting a setting set to be enabled in a restriction setting corresponding to the user authority to be disabled when it is determined that the type of authority of the operator is the administrator authority.

## Description

### Field of the Invention

The present disclosure relates to an image forming apparatus and the like.

### Background Art

Some image forming apparatuses such as multifunction peripherals include a function of retaining print data received for a print job, a document read by a scanner device, received fax data, and the like, and performing predetermined processing (hereinafter, also referred to as a hold function).

One aspect of the hold function includes a function of automatically generating a folder for each user based on identification information such as a user name and a computer name included in print data received from a terminal device such as a personal computer (PC), and storing the print data in the generated folder for each user.

For example, Japanese Patent Application Laid-Open No. 2012-254618 discloses an image forming apparatus in which, on an administrator setting screen of the image forming apparatus that automatically generates a user folder based on information included in print data received from a PC and stores the received print data in the generated folder, it is possible to set an arrangement order of user folders, a storage period of the print data, and the like.

### Summary of Invention

### Technical Problem

An object of the present disclosure is to provide, for example, an image forming apparatus that includes a function of generating a folder for each user based on identification information included in print data and storing the print data in the generated folder, and that is capable of performing easy management of users who use the function.

### Solution to Problem

To achieve the above object, an image forming apparatus according to an aspect of the present disclosure is an image forming apparatus including a printing function of storing received print data in a folder generated based on identification information added to the print data and performing printing of the print data based on a print instruction from an operator, the image forming apparatus including a storage that stores type information of an authority of the operator with respect to the image forming apparatus; and one or more controllers that control an operation related to the printing function, wherein the one or more controllers determine, based on the type information, whether a type of authority of the operator is user authority or administrator authority, and operate the printing function by setting a setting set to be enabled in a restriction setting corresponding to the user authority to be disabled when it is determined that the type of authority of the operator is the administrator authority.

Further, an image forming apparatus according to the present disclosure is an image forming apparatus including a printing function of storing received print data in a folder generated based on identification information added to the print data and performing printing of the print data based on a print instruction from an operator, the image forming apparatus including: a display; an authenticator that executes authentication processing of the operator with respect to the image forming apparatus; and one or more controllers that control an operation related to the printing function, wherein the one or more controllers display, on the display, a setting screen related to a setting of the printing function when the operator having administrator authority is authenticated by the authenticator.

Further, a control method for an image forming apparatus according to the present disclosure is a control method for an image forming apparatus including a printing function of storing received print data in a folder generated based on identification information added to the print data and performing printing of the print data based on a print instruction from an operator, the control method including: storing type information of an authority of the operator with respect to the image forming apparatus; controlling an operation related to the printing function, and determining a type of authority of the operator based on the type information, and operating the printing function by setting a setting set to be enabled in a restriction setting corresponding to the user authority to be disabled when it is determined that the type of authority of the operator is administrator authority.

### Advantageous Effects of Disclosure

According to the present disclosure, it is possible to provide, for example, an image forming apparatus that includes a function of generating a folder for each user based on identification information included in print data and storing the print data in the generated folder, and that is capable of performing easy management of users who use the function.

### Brief Description of the Drawings

FIG. 1 is a diagram illustrating a connection form between a multifunction peripheral and a PC according to a first embodiment.
FIG. 2 is an external perspective view illustrating an overall configuration of the multifunction peripheral according to the first embodiment.
FIG. 3 is a functional configuration diagram of the multifunction peripheral according to the first embodiment.
FIG. 4A is a diagram illustrating a data configuration of a print job.
FIG. 4B is a diagram illustrating the restriction setting under each of the user authority and administrator authority.
FIG. 5 is a diagram illustrating a user information management table.
FIG. 6 is a flowchart for describing a flow of processing according to the first embodiment.
FIG. 7 is a flowchart for explaining a flow of processing according to the first embodiment.
FIG. 8 is a flowchart for describing a flow of processing according to the first embodiment.
FIG. 9 is a diagram for describing an operation example according to the first embodiment.
FIG. 10 is a diagram for describing an operation example according to the first embodiment.
FIG. 11 is a diagram for describing an operation example according to the first embodiment.
FIG. 12 is a diagram for describing an operation example according to the first embodiment.
FIG. 13 is a diagram for describing an operation example according to the first embodiment.
FIG. 14 is a diagram for describing an operation example according to the first embodiment.
FIG. 15A is a diagram illustrating an operation example according to the first embodiment.
FIG. 15B is a diagram illustrating an operation example according to the first embodiment.
FIG. 16 is a diagram illustrating an operation example according to the first embodiment.
FIG. 17 is a diagram illustrating an operation example according to the first embodiment.
FIG. 18 is a flowchart illustrating a flow of processing according to a second embodiment.
FIG. 19 is a flowchart illustrating a flow of processing according to the second embodiment.
FIG. 20 is a diagram illustrating an operation example according to the second embodiment.
FIG. 21 is a flowchart illustrating a flow of processing according to a third embodiment.
FIG. 22 is a diagram illustrating an operation example according to the third embodiment.

### Description of Embodiments

Hereinafter, embodiments of the present disclosure will be described with reference to the drawings. The embodiments to be described below are merely examples for describing the disclosure, and the technical contents described in the claims are not limited to the following descriptions.

Various functions are known as a hold function. A document filing function, which is one aspect of the hold function, is a function of holding print data received as a print job (also referred to as a printer job) or document data read by a scanner device, received fax data, and the like in a storage location (such as a folder) prepared in advance in the image forming apparatus, and performing printing, transmission, downloading, and the like. A print release function, which is one aspect of the hold function, is a function of printing print data retained in an image forming apparatus set as a parent device by an image forming apparatus on a network set as a child device.

The hold function includes a function of automatically generating a folder for each user based on identification information such as a user name and a computer name included in a print job when a user transmits a print job from a terminal device such as a PC to an image forming apparatus, and storing print data included in the print job in the generated folder for each user. In using such a function, unlike the document filing function and the print release function described above, any user can view or operate print data stored in the generated folder without setting or generating a storage location for the print data in advance. Therefore, when a difference in authority between a (normal) user and an administrator is not provided, operations unintended by the administrator may be performed by the user, resulting in a problem that management of the image forming apparatus becomes difficult.

In the present disclosure, in an image forming apparatus including a printing function of storing print data in a folder generated based on identification information added to received print data and performing printing of the print data based on a print instruction from a user, for example, an image forming apparatus capable of improving operability of a user who uses the printing function is realized in the following embodiments.

### [1 First Embodiment]

In a first embodiment, a case in which an image forming apparatus according to the present disclosure is applied to a multifunction peripheral will be described, and a form in which an authentication function for an operator (user) who uses the multifunction peripheral (also referred to as a user authentication function) is set to be disabled in advance will be described. The multifunction peripheral is an image forming apparatus capable of realizing jobs related to copying, scanning, faxing, mail transmission, and the like in a single housing, and capable of printing, on a medium such as paper, an image based on print data received as a print job (a color image or a monochrome image).

### [1.1 Overall Configuration]

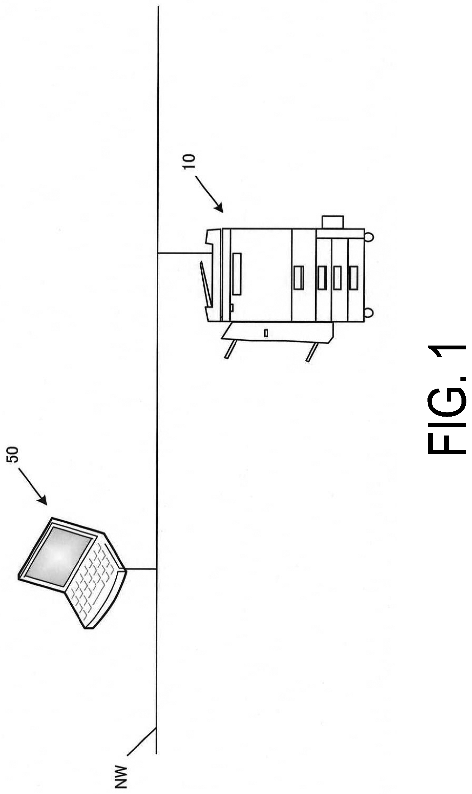

FIG. 1 is a diagram illustrating an example of a connection form between a multifunction peripheral 10 and a PC 50 as a terminal device. The multifunction peripheral 10 and the PC 50 are configured to be capable of mutual communication via a network NW. The multifunction peripheral 10 can receive print data transmitted as a print job from the PC 50 and print an image based on the print data on a medium such as paper.

### [1.2 Functional Configuration of Multifunction Peripheral 10]

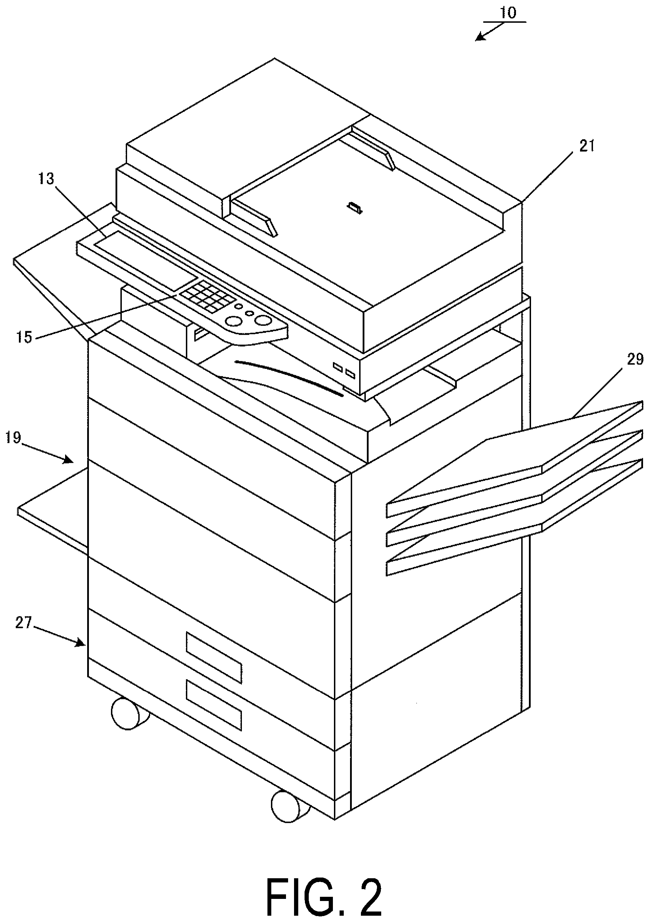

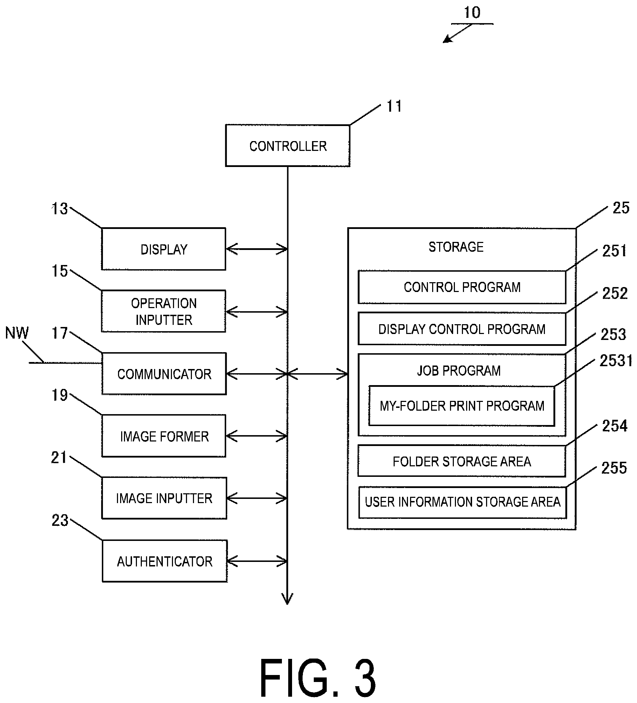

FIG. 2 is an external perspective view illustrating an overall configuration of the multifunction peripheral 10 according to the embodiment. FIG. 3 is a functional configuration diagram of the multifunction peripheral 10.

The multifunction peripheral 10 includes a controller 11, a display 13, an operation inputter 15, a communicator 17, an image former 19, an image inputter 21, an authenticator 23, and a storage 25.

The controller 11 controls the multifunction peripheral 10 in an integrated manner. The controller 11 can include one or more arithmetic devices (such as a central processing unit (CPU), a digital signal processor (DSP), or the like). The controller 11 realizes various functions exhibited by the multifunction peripheral 10 by reading and executing various programs stored in the storage 25. The controller 11 may be configured as a SoC (system on a chip) having a plurality of functions among the functions described below. The controller 11 may also be configured by one or more control circuits.

The display 13 displays various types of information to a user or the like. The display 13 can be constituted by, for example, a liquid crystal display (LCD), an organic electro-luminescence (EL) display, a micro LED display, or a mini LED display.

The operation inputter 15 receives input of operations or information from the user or the like. The operation inputter 15 can be configured by, for example, various input devices such as operation keys including hard keys or software keys, or buttons. The operation inputter 15 can also be configured as a touch panel display that enables input through the display 13. In this case, as a method for input to the touch panel display, for example, a resistive film method, an infrared method, an electromagnetic induction method, a capacitive method, or the like can be employed.

The communicator 17 includes a wired/wireless network communication interface for communicating with other devices such as the PC 50 through the network NW such as a local area network (LAN), a wide area network (WAN), the Internet, a telephone line, and a fax line. The wireless network communication interface may include, for example, interfaces for short-range wireless communication such as Bluetooth (registered trademark), Wi-Fi (registered trademark), and IrDA.

The image former 19 forms an image based on print data on a medium such as paper. The image former 19 feeds paper from a paper feeder 27, forms an image based on the print data on the paper, and then discharges the paper to a paper discharger 29. The image former 19 can be constituted by, for example, a laser printer using an electrophotographic scheme. In this case, the image former 19 forms images using toner supplied from toner cartridges (not illustrated) corresponding to respective toner colors (for example, cyan, magenta, yellow, and black).

The image inputter 21 generates scan data by scanning and reading a document image to be read. The image inputter 21 may be configured as a scanner device including an image sensor such as a charge coupled device (CCD) and a contact image sensor (CIS). The configuration of the image inputter 21 is not limited as long as it has a configuration of generating scan data composed of RGB (R: red, G: green, and B: blue) analog signals by reading a reflected light image from the document image using the image sensor. Note that it is also possible to configure the image inputter 21 as an interface capable of acquiring image data stored in a storage device such as a USB memory in file formats such as TIFF, BMP, JPEG, or image data transmitted from another device such as the PC 50.

The authenticator 23 realizes an authentication function in the multifunction peripheral 10 by authenticating a user. For example, the authenticator 23 displays a login screen on the display 13 (the operation inputter 15), and when authentication information input by the user via the login screen matches authentication information included in any of user information stored in advance in the user information storage area 255, the authenticator 23 authenticates the user corresponding to the authentication information as a logged in user who may operate the multifunction peripheral 10.

Incidentally, the above-described authentication method is an authentication method referred to as knowledge-based authentication, but the authenticator 23 can use various authentication methods other than the knowledge-based authentication. For example, the authenticator 23 can use authentication schemes such as possession-based authentication or biometric authentication. The authenticator 23 may also authenticate a user using an external device that provides the authentication function, such as an authentication server. In this case, the authenticator 23 transmits authentication information input by the user via the login screen to the authentication server, and performs the user authentication in accordance with an authentication result received from the authentication server. Functions of the authenticator 23 may be realized by the controller 11 reading an authentication program (not shown).

The storage 25 is one or more storage devices that store various programs and various types of data necessary for operation of the multifunction peripheral 10. The storage 25 can be constituted by, for example, a storage device such as a random access memory (RAM), a solid state drive (SSD), a hard disk drive (HDD), or a read only memory (ROM).

In the first embodiment, the storage 25 stores a control program 251, a display control program 252, and a job program 253, and secures a folder storage area 254 and a user information storage area 255.

The control program 251 is a program that is read by the controller 11 when the multifunction peripheral 10 is controlled in an integrated manner. The controller 11 that has read the control program 251 controls driving of hardware such as the display 13, the operation inputter 15, the communicator 17, the image former 19, the image inputter 21, and the authenticator 23.

The display control program 252 is a program that is read by the controller 11 when output control for a screen displayed on the display 13 or the operation inputter 15 configured as a touch panel display is performed. The controller 11 that has read the display control program 252 controls display of the operation screen (such as an authentication screen, a home screen, and a my-folder print screen to be described below) displayed on the display 13 (the operation inputter 15).

The job program 253 is a program that is read by the controller 11 when various jobs such as a print job, a copy job, a scan job, a fax job, and a mail transmission job are executed. The controller 11 that has read the job program 253 switches a device mode of the multifunction peripheral 10 to a job mode for executing each job, and executes a job for which an execution instruction has been received.

The job program 253 according to the first embodiment includes a my-folder print program 2531. The controller 11 that has read the my-folder print program 2531 integrally controls an operation related to a function of automatically generating a folder for each user based on identification information such as a user name and a computer name included in the print job, and storing the print data included in the print job in the generated folder for each user (hereinafter, also referred to as a my-folder printing function). Specifically, when the controller 11 that has read the my-folder print program 2531 determines that at least one of user identification information or device identification information as identification information is added to the received print data, the controller 11 acquires the identification information.

Here, the user identification information is identification information including a user name of a user who is an owner of the print data or similar identification information (for example, a mail address, account information for a specific site, login information such as a login ID, a login name, and a login password for logging in to the multifunction peripheral 10, a card number of an IC card, or a combination thereof). Meanwhile, the device identification information is, for example, identification information for identifying a terminal device such as the PC 50 that performs a print request, including a computer name, an IP address, a media access control (MAC) address, a model number, a serial number, an identification number generated by a specific algorithm, a combination thereof, and the like.

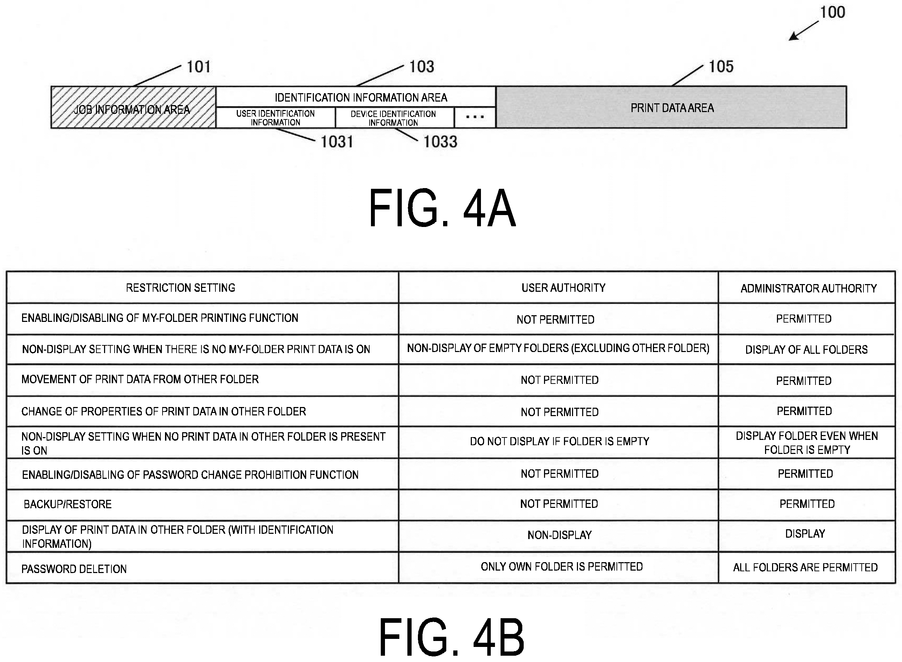

Here, an example of a data configuration of the print data (a print job) from which the controller 11 that has read the my-folder print program 2531 acquires the identification information will be described with reference to FIG. 4A.

FIG. 4A is a diagram schematically illustrating an example of a data configuration of a print job 100 acquired from the PC 50. In FIG. 4A, an example in which the data configuration of the print job 100 includes a job information area 101, an identification information area 103, and a print data area 105 will be described, but the data configuration of the print job 100 is not limited to the example illustrated in FIG. 4A.

The job information area 101 is an area for storing information necessary for the multifunction peripheral 10 to execute a job based on the print job 100. In the job information area 101, for example, job identification information such as a job ID and a job name for uniquely identifying the print job 100, information on a connection to the multifunction peripheral 10, print setting information such as the number of copies, the number of pages, a paper size, a page layout, color management, a font, and finishing settings, date and time information related to execution date and time (transmission date and time) of the job, and the like can be stored as job information.

The identification information area 103 is an area for storing identification information such as user identification information 1031 and device identification information 1033. The user identification information 1031 includes a login user name for a terminal device such as the PC 50, a user name input via a print setting screen, and the like. Further, the device identification information 1033 includes, for example, a computer name input via the print setting screen as necessary.

The print data area 105 is an area for storing a main body portion of the print data. The print data stored in the print data area 105 only needs to be described in a page description language (PDL) interpretable by the multifunction peripheral 10, and may be a proprietary one provided by a manufacturer of the multifunction peripheral 10 or, for example, one described in a PDL such as PostScript.

In FIG. 4A, an example in which the print job 100 includes the job information area 101, the identification information area 103, and the print data area 105 has been described, but the identification information area 103 may be included in the job information area 101 or may be included in, for example, a header portion of the print data stored in the print data area 105. Furthermore, data transmitted to the multifunction peripheral 10 is not limited to the print job, and may be, for example, document data in a pdf format or the like or image data in a jpeg format or the like to which identification information corresponding to the user identification information 1031 or the device identification information 1033 is added.

The controller 11 stores print data in a my-folder to which a folder name corresponding to the identification information is assigned, based on at least one of the acquired user identification information 1031 or the acquired device identification information 1033.

When the my-folder to which the folder name corresponding to the identification information is assigned does not exist, the controller 11 automatically generates the my-folder to which the folder name corresponding to the identification information is assigned and stores the print data. On the other hand, for print data for which a my-folder cannot be automatically generated due to, for example, deficiency or absence of identification information, the print data is stored in another folder provided as a backup destination.

Further, the controller 11 that has read the my-folder print program 2531 may determine whether a type of authority of a user authenticated as a login user by the authenticator 23 is user authority or administrator authority, by referring to a user information management table, which will be described below. When it is determined that the type of authority of the login user is the user authority, the controller 11 operates the my-folder printing function with a restriction setting corresponding to the user authority enabled. On the other hand, when it is determined that the type of authority of the login user is administrator authority, the controller 11 operates the my-folder printing function with a setting set to be enabled in the restriction setting corresponding to the user authority set to be disabled.

Here, the restriction setting in accordance with the type of authority of the login user in the controller 11 will be described with reference to FIG. 4B. FIG. 4B shows an example of specific items of the restriction setting according to the present disclosure, and is a table in which respective items of the restriction setting and restriction content under the user authority and administrator authority are summarized.

For example, under the user authority, when the restriction setting related to "enabling/disabling of the my-folder printing function" is set to be enabled, the setting (setting for switching between enabling and disabling of the my-folder printing function) becomes "not permitted". Similarly, when a restriction setting related to "non-display setting when there is no my-folder print data (not stored) is ON" is set to be enabled, "empty folders are not displayed (except for the other folder)". Similarly, when a restriction setting related to "movement of the print data from the other folder" is set to be enabled, the setting (the movement of the print data from the other folder) becomes "not permitted". Similarly, when a restriction setting related to "change of properties of the print data in the other folder" is set to be enabled, the setting (change of properties of the print data in the other folder) becomes "not permitted". Similarly, when a restriction setting related to "non-display setting when there is no print data in the other folder (not stored) is ON" is set to be enabled, "the folder is not displayed if empty" will operate. Similarly, when a restriction setting related to "enabling/disabling of password change prohibition function" is set to be enabled, the setting (a setting for switching between enabling and disabling of password change prohibition function) becomes "not permitted". Similarly, when a restriction setting related to "backup and restore" is set to be enabled, the setting (backup and restore of my-folders or other folders) becomes "not permitted". Similarly, when a restriction setting related to "display of the print data in the other folder (with identification information)" is set to be enabled, the print data becomes "not displayed". Similarly, when a restriction setting related to "deletion of password" is set to be enabled, "only own folder is permitted".

On the other hand, when the controller 11 determines that the type of authority of the login user is administrator authority, the controller 11 sets the setting set to be enabled in the restriction setting corresponding to the user authority to be disabled. That is, under the administrator authority, the setting (setting for switching between enabling and disabling of the my-folder printing function) is made "permitted" by disabling the restriction setting related to "enabling/disabling of the my-folder printing function". Similarly, when the restriction setting related to "non-display setting when there is no my-folder print data (not stored) is ON" is set to be disabled, "Display all folders" is set. Similarly, by setting the restriction setting related to "movement of the print data from the other folder" to be disabled, the setting (the movement of the print data from the other folder) is made "permitted". Similarly, the restriction setting related to "change of properties of the print data in the other folder" is set to be disabled so that the setting (change of properties of the print data in the other folder) is made "permitted". Similarly, the restriction setting related to "non-display setting when there is no print data in the other folder (not stored) is ON" is set to be disabled so that "Display the folder even when the folder is empty" is set. Similarly, the setting (setting for switching between enabling and disabling of the password change prohibition function) is made "permitted" by disabling the restriction setting related to "enabling/disabling of password change prohibition function". Similarly, the setting (backup and restore of my-folders or other folders) is made "permitted" by disabling the restriction setting related to "backup and restore". Similarly, the print data is set to be "displayed" by disabling the restriction setting related to "display of the print data in the other folder (with identification information)". Similarly, "all folders are permitted" is set by disabling the restriction setting related to "deletion of password".

Thus, a large difference in authority between the user and the administrator is provided, so that it is possible to prevent operations unintended by the administrator from being performed by the user, and management of the multifunction peripheral 10 is facilitated.

Returning again to FIG. 3, the folder storage area 254 is a storage area for storing the my-folder to which the folder name corresponding to the identification information is assigned, another folder that is a storage destination (backup destination) for print data for which a my-folder cannot be automatically generated, and the like. The folder storage area 254 may be provided in another storage device (not shown) other than the storage 25.

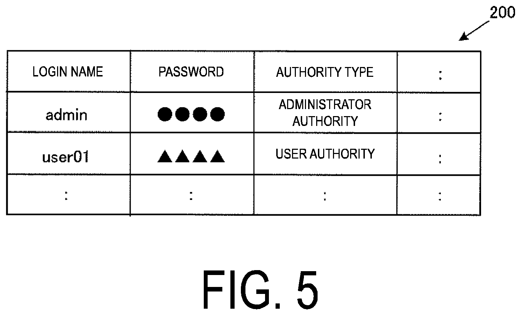

The user information storage area 255 is a storage area for storing user information registered in advance for a user who operates the multifunction peripheral 10. The user information includes at least authentication information for authenticating the user who operates the multifunction peripheral 10, and type information regarding the type of authority of the user. Here, an example of a configuration of a user information management table stored in the user information storage area 255 will be described with reference to FIG. 5.

A user information management table 200 illustrated in FIG. 5 includes, as management items, authentication information including a login name and a password, and a type of authority. The login name represents a name of a user when a user logs in to the multifunction peripheral 10 (login name). The password is a login password set in association with the login name. The type of authority is type information representing the type of authority of a login user specified by the login name. FIG. 5 indicates that the type of authority of the login name "admin" is "administrator authority", and indicates that the type of authority of the login name "user01" is "the user authority". The type of authority may be managed on a group basis, and for example, a plurality of login users belonging to the administrator authority or a plurality of login users belonging to the user authority may be included in the same authority group. The items managed in the user information management table 200 may include attribute information regarding the user, such as a name, telephone number, mail address, and affiliation department of the user, in addition to the authentication information and type information related to the type of authority.

### [1.3 Functional Configuration of PC 50]

A configuration of the PC 50 as a terminal device is not particularly limited as long as the PC 50 is configured to be able to output the print job 100 to the multifunction peripheral 10 via a driver program such as a printer driver, and an information processing device such as a PC, a smartphone, or a tablet generally available on the market can be used. Therefore, detailed description of the PC 50 is omitted here.

### [1.4 Flow of Processing]

### [1.4.1 Processing Related to Setting for Enabling My-Folder Function]

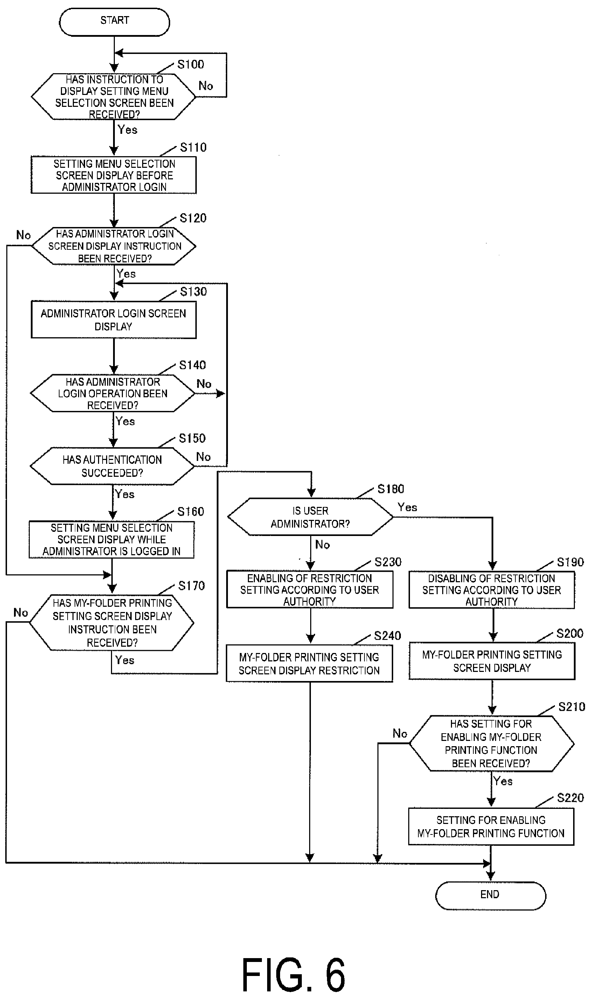

Next, a flow of processing according to the first embodiment will be described. FIG. 6 is a flowchart illustrating a flow of processing from a state before the user having the administrator authority logs in to the multifunction peripheral 10 until the my-folder printing function is set to be enabled. The processing described in the following flowcharts will be described as processing that is executed by the authenticator 23 and the controller 11 that has read the control program 251, the display control program 252, the job program 253 (the my-folder print program 2531), and the like.

The controller 11 determines whether an instruction to display a setting menu selection screen has been received by receiving, from the user, an instruction to select the "setting" button or the like displayed in a function selection area of the home screen or the like to be described below (step S100). When it is determined that the instruction to display the setting menu selection screen has been received, the controller 11 displays the setting menu selection screen (before administrator login) (step S100; Yes → step S110). When it is determined that the instruction to display the setting menu selection screen has not been received, the controller 11 waits until the display instruction is received (step S100; No).

The controller 11 determines whether an instruction to display the administrator login screen has been received from the user via the setting menu selection screen (step S110). When it is determined that the instruction to display the administrator login screen has been received, the controller 11 notifies the authenticator 23 that the display instruction has been received. The authenticator 23 that has received the notification displays the administrator login screen (step S120; Yes → step S130). When the controller 11 determines that the instruction to display the administrator login screen has not been received, the controller 11 proceeds to processing of step S170 (step S120; No → step S170).

The authenticator 23 determines whether a login operation by the user has been received via the administrator login screen (step S140). When it is determined that the login operation by the user has been received, the authenticator 23 executes authentication processing and determines whether the authentication of the user as an administrator has succeeded (step S140; Yes → step S150). On the other hand, when it is determined that the login operation by the user has not been received (step S140; No) or when the authentication as the administrator has failed (step S150; No), the authenticator 23 continues display of the administrator login screen (step S130).

When it is determined that the authentication of the user as an administrator has succeeded, the authenticator 23 notifies the controller 11 of the authentication result. The controller 11 that has received the notification displays the setting menu selection screen while the administrator is logged in (step S150; Yes → step S160).

Next, the controller 11 determines whether an instruction to display a my-folder print setting screen has been received via the setting menu selection screen while the administrator is logged in (step S170). When it is determined that the instruction to display the my-folder print setting screen has been received, the controller 11 determines whether the user who inputs the instruction to display the my-folder print setting screen is an administrator having administrator authority (step S180).

When it is determined that the user is an administrator, that is, when it is determined that the operation authority of the user is the administrator authority, the controller 11 sets the restriction setting corresponding to the user authority to be disabled (step S180; Yes → step S190). Next, the controller 11 displays the my-folder print setting screen (step S200).

The controller 11 determines whether a my-folder print enable setting for enabling the my-folder function has been received via the displayed my-folder print setting screen (step S210). When it is determined that the my-folder print enable setting has been received, the controller 11 sets the my-folder printing function to be enabled and ends the processing (step S210; Yes → step S220). On the other hand, when it is determined that the my-folder print enable setting has not been received, the controller 11 ends the processing (step S210; No).

Incidentally, when the controller 11 determines that the user is not the administrator, that is, when it is determined that the operation authority of the user is the user authority, the controller 11 sets the restriction setting corresponding to the user authority to be enabled (step S180; No → step S230). Next, the controller 11 restricts display of the my-folder print setting screen and ends the processing (step S240).

### [1.4.2 Processing Related to Display of My-Folder Print Screen]

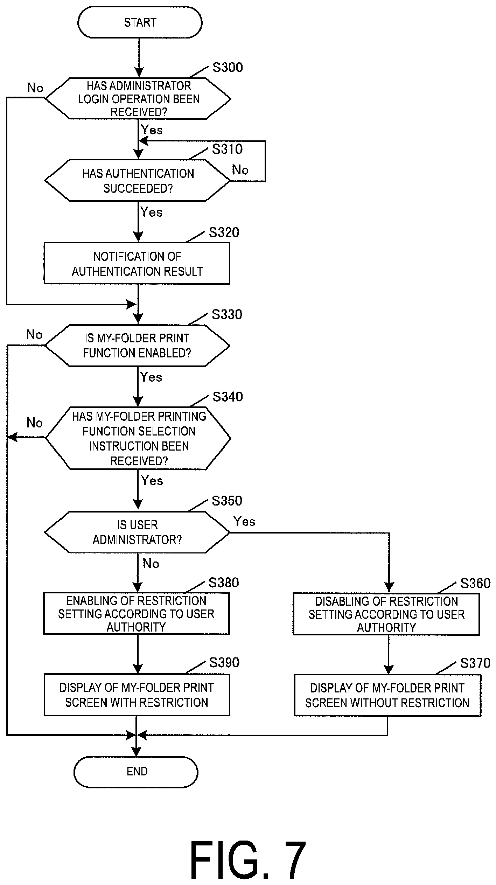

Next, processing related to display of the my-folder print screen will be described with reference to the flowchart of FIG. 7.

When the processing is started, the authenticator 23 determines whether the login operation by the user has been received via the administrator login screen (step S300). When it is determined that the login operation by the user has been received, the authenticator 23 executes the authentication processing and determines whether the authentication of the user as an administrator has succeeded (step S300; Yes → step S310). On the other hand, when it is determined that the login operation by the user has not been received (step S300; No), the authenticator 23 proceeds to processing of step S330 (step S300; No → step S330).

When it is determined that the authentication of the user as an administrator has succeeded, the authenticator 23 notifies the controller 11 of the authentication result (step S310; Yes → step S320). The controller 11 that has received the notification determines whether the my-folder printing function is enabled (step S330).

When it is determined that the my-folder printing function is set to be enabled, the controller 11 determines whether an instruction to select the my-folder printing function has been received (step S330; Yes → step S340). When it is determined that the instruction to select the my-folder printing function has been received, the controller 11 determines whether the user is the administrator having the administrator authority (step S340; Yes → step S350). On the other hand, when it is determined that the my-folder printing function is not enabled (step S330; No), or when it is determined that the instruction to select the my-folder printing function has not been received (step S340; No), the controller 11 ends the processing. When the controller 11 determines that the user is the administrator, that is, when it is determined that the operation authority of the user is the administrator authority, the controller 11 sets the restriction setting corresponding to the user authority to be disabled (step S350; Yes → step S360). Next, the controller 11 displays the my-folder print screen without restrictions corresponding to the user authority, and ends the processing (step S370).

On the other hand, when the controller 11 determines that the user is not the administrator, that is, when it is determined that the operation authority of the user is the user authority, the controller 11 sets the restriction setting corresponding to the user authority to be enabled (step S350; No → step S380). Next, the controller 11 displays the my-folder print screen with the restrictions corresponding to the user authority, and ends the processing (step S390).

### [1.4.3 Processing Related to Storage of Print Data]

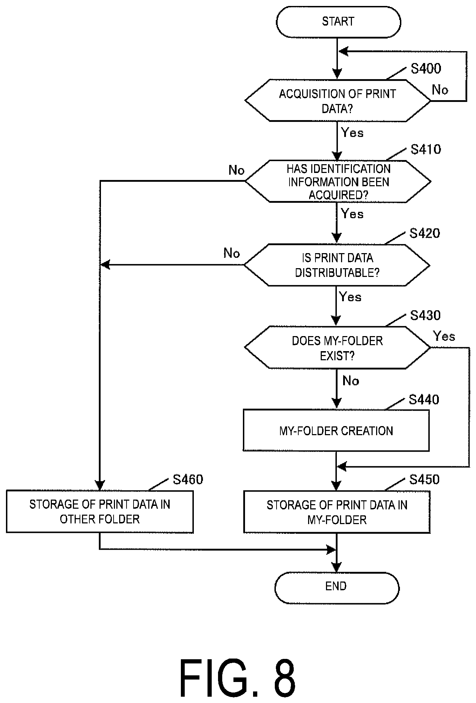

Next, processing from acquisition of the print data to storage in a my-folder (or other folder) when the my-folder printing function is enabled will be described with reference to the flowchart of FIG. 8.

First, the controller 11 determines whether the print data has been acquired from the PC 50 (step S400). When it is determined that the print data has been acquired, the controller 11 determines whether at least one of the user identification information 1031 or the device identification information 1033 added to the print data could be acquired (extracted) (step S400; Yes → step S410). When it is determined that the print data has not been acquired, the controller 11 waits until the print data is acquired (step S400; No).

When it is determined that identification information added to the print data could be acquired, the controller 11 determines whether the acquired identification information has no defect or deficiency and whether the print data can be sorted into a my-folder based on the identification information (step S410; Yes → step S420). When it is determined that the print data can be sorted, the controller 11 determines whether the my-folder to which the folder name corresponding to the acquired identification information is assigned exists (step S420; Yes → step S430).

When it is determined that the my-folder to which the folder name corresponding to the acquired identification information is assigned exists, the controller 11 stores the print data in the my-folder and ends the processing (step S430; Yes → step S450). When it is determined that the my-folder to which the folder name corresponding to the acquired identification information is assigned does not exist, the controller 11 automatically generates the my-folder to which the folder name corresponding to the identification information is assigned, and stores the print data (step S430; No → step S440 → step S450).

Incidentally, when it is determined in step S410 that the identification information added to the print data could not be acquired (step S410; No), or when it is determined in step S420 that sorting of the print data into the my-folder based on the identification information is not permitted (step S420; No), the controller 11 stores the print data in another folder for backup and ends the processing (step S460).

### [1.5 Operation Example]

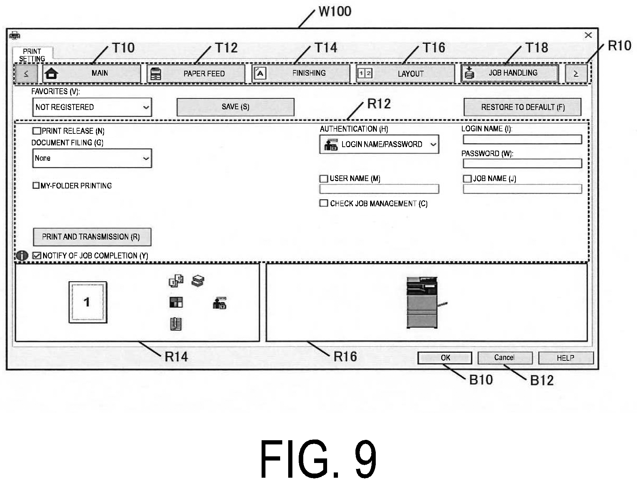

Next, an operation example according to the embodiment will be described. FIG. 9 is a diagram illustrating an example of a display configuration of a print setting screen W100 provided by a driver program (not shown) installed in the PC 50. The print setting screen W100 can be displayed based on a print execution instruction received via application software related to creation of documents, charts, and the like. The print setting screen W100 is a screen for receiving a print setting for outputting, as the print job 100, print data created by the application software to the multifunction peripheral 10.

Such a print setting screen W100 includes a tab display region R10, a setting item display region R12, a print image display region R14, a main body image display region R16, an OK button B10, and a cancel button B12.

The tab display region R10 is an area for displaying a tab for receiving a display switching instruction for a print setting item displayed in the setting item display region R12. Each tab displayed in the tab display region R10 is formed in a substantially rectangular shape, and a name representing the print setting item and an icon representing the print setting item are displayed together in a display area having a rectangular shape, so that a user can easily ascertain print setting content that can be set by selection of each tab. FIG. 9 illustrates, as a configuration example of tabs displayed in the tab display region R10, an example in which a main tab T10, a paper feed tab T12, a finishing tab T14, a layout tab T16, and a job handling tab T18 are displayed in the tab display region R10.

The main tab T10 is a tab for receiving an instruction to display print setting items related to functions frequently used by the user. The paper feed tab T12 is a tab for receiving an instruction to display print setting items related to a paper size, a paper type, and a paper feed tray that are used for printing. The finishing tab T14 is a tab for receiving an instruction to display print setting items related to a finishing function such as stapling, punching, and paper folding, and a setting of a paper discharge tray. The layout tab T16 is a tab for receiving an instruction to display print setting items related to a layout such as double-sided printing and bookbinding. The job handling tab T18 is a tab for mainly receiving an instruction to display setting instructions related to the hold function. Incidentally, FIG. 9 illustrates an example in which the main tab T10, the paper feed tab T12, the finishing tab T14, the layout tab T16, and the job handling tab T18 are displayed as tabs displayed in the tab display region R10, but in addition to these tabs, for example, an insertion tab for receiving an instruction to display print setting items related to a function of inserting a cover sheet, interleaf paper, an index sheet, and the like, a stamp tab for receiving an instruction to display print setting items related to a watermark or stamp function, an image quality tab for receiving an instruction to display print setting items related to image quality, and a detailed setting tab for receiving an instruction to display detailed print setting items related to printing and linked printing in which print data is divided and printed by a plurality of multifunction peripherals, and the like may be included. These tabs can be displayed by receiving an instruction to select arrow buttons provided on left and right sides of the tab display region R10.

Further, FIG. 9 illustrates an example in which the job handling tab T18 is selected by the user in the tab display region R10. The job handling tab T18 selected by the user is configured such that it can be identified that a print setting related to the job handling is being selected, for example, by highlighting an outer frame portion having rectangular shape or coloring the selected tab.

The setting item display region R12 is a display area for displaying print setting items corresponding to the tab for receiving a display instruction in the tab display region R10. In the setting item display region R12, different print setting items are displayed depending on the tab for receiving the display instruction. FIG. 9 illustrates an example in which setting items for receiving a setting regarding the user authentication related to use of the hold function are displayed in addition to a checkbox for receiving an instruction to select print release which is one aspect of the hold function, a pull-down menu for receiving function selection related to document filing which is also one aspect of the hold function, a my-folder print checkbox capable of receiving an output instruction for a print job corresponding to my-folder print, and the like in response to the selection of the job handling tab T18. When the my-folder print checkbox is checked, for example, the driver program can output the print job 100 having the data structure illustrated in FIG. 4A to the multifunction peripheral 10. The my-folder print checkbox can be optionally provided, and the driver program may be configured to output the print job 100 having the data structure illustrated in FIG. 4A when the my-folder printing function is set to be enabled even when the checkbox is not provided.

The print image display region R14 is a display area for displaying a print image based on items set in the setting item display region R12. The main body image display region R16 is a display area for displaying a main body image of an attachment state of options attached to the multifunction peripheral 10, a paper discharge tray, or the like.

The OK button B10 is a button for receiving an instruction to confirm items set in the setting item display region R12. The cancel button B12 is a button for receiving a cancel instruction for the item set in the setting item display region R12.

When necessary settings are made by the user via the print setting screen W100 and the instruction to select the OK button B10 is received, the printer driver generates a print job in which at least one of the user identification information or the device identification information as identification information is added to the print data, and outputs the print job to the multifunction peripheral 10.

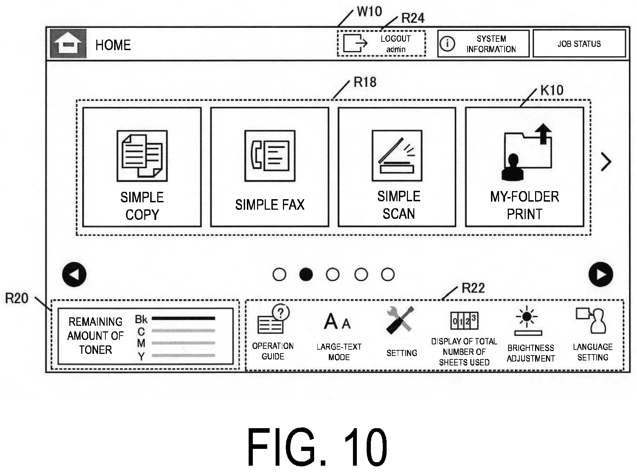

Next, an example of a display configuration of a home screen W10 when the my-folder printing function is enabled will be described with reference to FIG. 10. The home screen W10 illustrated in FIG. 10 represents a state in which the administrator has logged in to the multifunction peripheral 10 in step S300 (Yes) of FIG. 7. The home screen W10 includes a mode selection region R18, a device state display region R20, a function selection region R22, and a logout button display region R24. Operation screens of the multifunction peripheral 10 described in FIG. 10 and the subsequent diagrams are described as operation screens displayed on the display 13 (the operation inputter 15) of the multifunction peripheral 10, but when the multifunction peripheral 10 is configured to include a web server function, these operation screens may also be displayed via a web screen (web browser) of the PC 50.

The mode selection region R18 is a display area for displaying shortcut keys for receiving an instruction for screen transition to various setting screens related to modes and functions that can be realized by the multifunction peripheral 10. FIG. 10 illustrates an example in which a "my-folder print" shortcut key K10 is displayed in addition to shortcut keys related to "simple copy", "simple fax", and "simple scan" in the mode selection region R18. The "my-folder print" shortcut key K10 is a shortcut key for receiving an instruction for screen transition to the my-folder print screen to be described below (the instruction to select the my-folder printing function). When the my-folder printing function is set to be disabled, display of the "my-folder print" shortcut key K10 is restricted.

The device state display region R20 is an area for displaying a device state of the multifunction peripheral 10. The example of FIG. 10 is an example in which a remaining toner amount is displayed in the device state display region R20.

The function selection region R22 is a display area for displaying various buttons for receiving a change instruction, a reference instruction, and the like related to function settings of the multifunction peripheral 10. For example, when a "large font mode" button is selected, a check mark is added at the right corner of the button, and the character size on the screen becomes larger. In addition, when a "total use count display" button is selected, a display screen showing the total number of sheets used and the toner remaining amount (%) is displayed. Further, the "setting" button is a selection button for receiving the instruction to display the setting menu selection screen described in the next drawing.

The logout button display region R24 is a display area for displaying a logout button for receiving a logout instruction from the multifunction peripheral 10. In the logout button display region R24, a login name "admin" of a user (administrator) with respect to the multifunction peripheral 10 is displayed in addition to the logout button. When a selection instruction for the logout button is received from the user (administrator), the controller 11 releases a login state of the user (administrator).

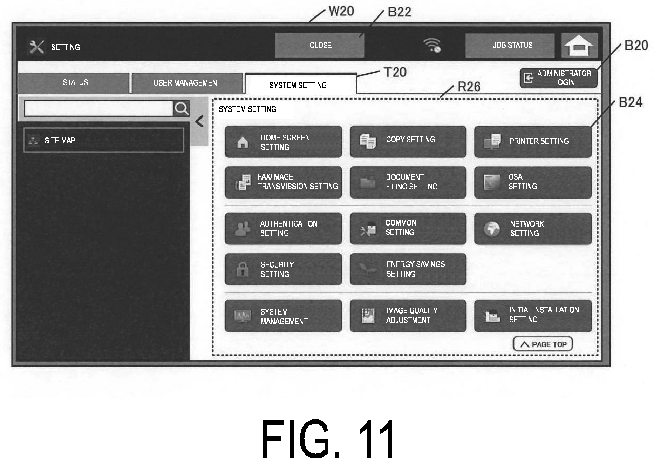

Next, FIG. 11 is a diagram illustrating an example of a display configuration of the setting menu selection screen W20 before administrator login. The setting menu selection screen W20 illustrated in FIG. 11 can be displayed by receiving the instruction to select the "setting" button or the like displayed in the function selection region R22 of the home screen W10, and represents a state before the user having the administrator authority logs in to the multifunction peripheral 10.

The setting menu selection screen W20 illustrated in FIG. 11 includes a setting menu selection region R26, an administrator login button B20, and a close button B22. The setting menu selection region R26 is an area for receiving an input/selection instruction related to system settings of the multifunction peripheral 10, and can be displayed by receiving the instruction to select a system setting tab T20 provided in an upper portion of the area. The setting menu selection region R26 includes, for example, selection buttons corresponding to various setting items such as a home screen setting button, a document filing setting button, and a printer setting button B24, and can display a setting screen corresponding to each setting item by receiving an instruction to select a selection button desired by the user.

The administrator login button B20 is a selection button for receiving the instruction to display the administrator login screen from the user. A user whose type of authority is administrator authority can select the administrator login button B20 and input necessary authentication information via the administrator login screen to be described in the next drawing, thereby logging in to the multifunction peripheral 10 as an administrator.

The close button B22 is a selection button for receiving a display termination instruction of the setting menu selection screen W20 from the user. When the selection instruction for the close button B22 is received, the controller 11 terminates display of the setting menu selection screen W20.

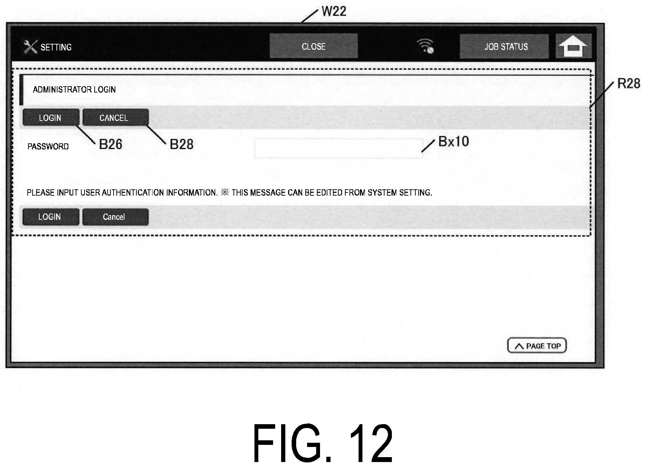

FIG. 12 is a diagram illustrating an example of a display configuration of an administrator login screen W22 that is displayed by the controller 11 when a selection instruction for the administrator login button B20 is received. The administrator login screen W22 has an authentication information input region R28, and the authentication information input region R28 includes a password input box Bx10, a login button B26, and a cancel button B28.

The password input box Bx10 is an input box for receiving input of a password of the user having the administrator authority. The login button B26 is a selection button for receiving an instruction to execute the authentication processing. When the authenticator 23 receives the instruction to select the login button B26 from the user, the authenticator 23 performs authentication processing based on a password input to the password input box Bx10. The cancel button B28 is a selection button for receiving an instruction to cancel the authentication processing via the administrator login screen W22. When the authenticator 23 receives the instruction to select the cancel button B28 from the user, the authenticator 23 discards input contents for the password input box Bx10 and cancels the authentication processing. Regardless of whether or not there is input to the password input box Bx10, when the instruction to select the cancel button B28 is received, the authenticator 23 may also end a display of the administrator login screen W22.

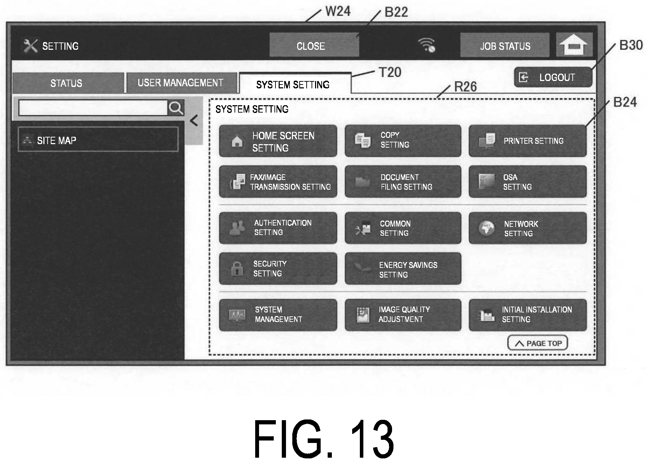

Next, FIG. 13 is a diagram illustrating an example of a display configuration of the setting menu selection screen W24 while the administrator is logged in. Since the setting menu selection screen W24 illustrated in FIG. 13 has the same configuration as the setting menu selection screen W20 illustrated in FIG. 11, detailed description thereof is omitted here.

In the setting menu selection screen W24, the administrator login button B20 in the setting menu selection screen W20 is changed to a logout button B30. The logout button B30 is a button for receiving a logout instruction from the multifunction peripheral 10 of a user logged in as an administrator. When the instruction to select the logout button B30 is received from the user, the controller 11 executes logout processing from the multifunction peripheral 10 for the user logged in as an administrator. The controller 11 changes the display of the logout button B30 to the administrator login button B20 illustrated in FIG. 11.

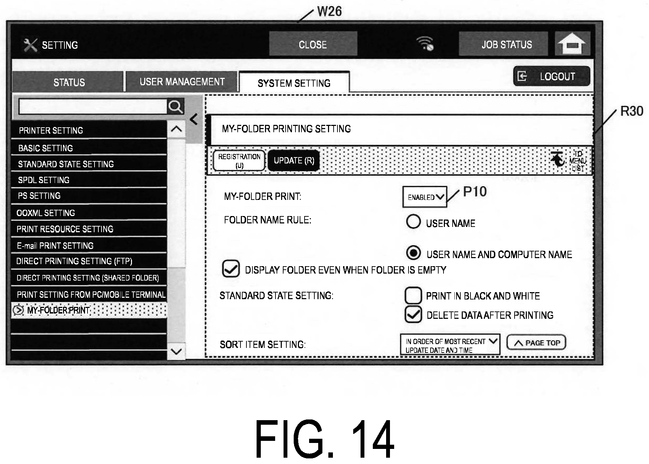

FIG. 14 is a diagram illustrating an example of a display configuration of a my-folder print setting screen W26 for receiving a setting related to my-folder print. The my-folder print setting screen W26 can be displayed by selecting the printer setting button B24 in the setting menu selection region R26 of FIG. 13 or the like.

Here, the my-folder print setting screen W26 according to FIG. 14 is an example of a setting screen displayed by the controller 11 when the type of authority of the user is the administrator authority. The my-folder print setting screen W26 includes a my-folder print setting region R30. The my-folder print setting region R30 includes a pull-down menu P10 for receiving an instruction to switch a setting of enabling/disabling of the my-folder printing function, radio buttons related to a setting of a folder name rule, a checkbox "display a folder even when the folder is empty", and setting items such as a standard state setting and a sort item setting. The setting items displayed in the my-folder print setting region R30 are merely an example, and setting items related to the my-folder printing function are not limited to the content.

The my-folder print setting region R30 illustrated in FIG. 14 shows a state in which the my-folder printing function is set to be "enabled", and "user name and computer name" is designated as a folder name (folder designation) rule of the my-folder. Although a display setting for the my-folder when there is no print data is set to be enabled, the checkbox may be omitted when a form in which "Display all folders" is set as a default setting by disabling a restriction setting related to "non-display setting when there is no print data is ON". In the first embodiment, the my-folder print setting screen W26 is configured to be displayed only when the type of authority of the user is the administrator authority, and therefore a change of settings related to my-folder print by a (general) user whose type of authority is the user authority can be restricted.

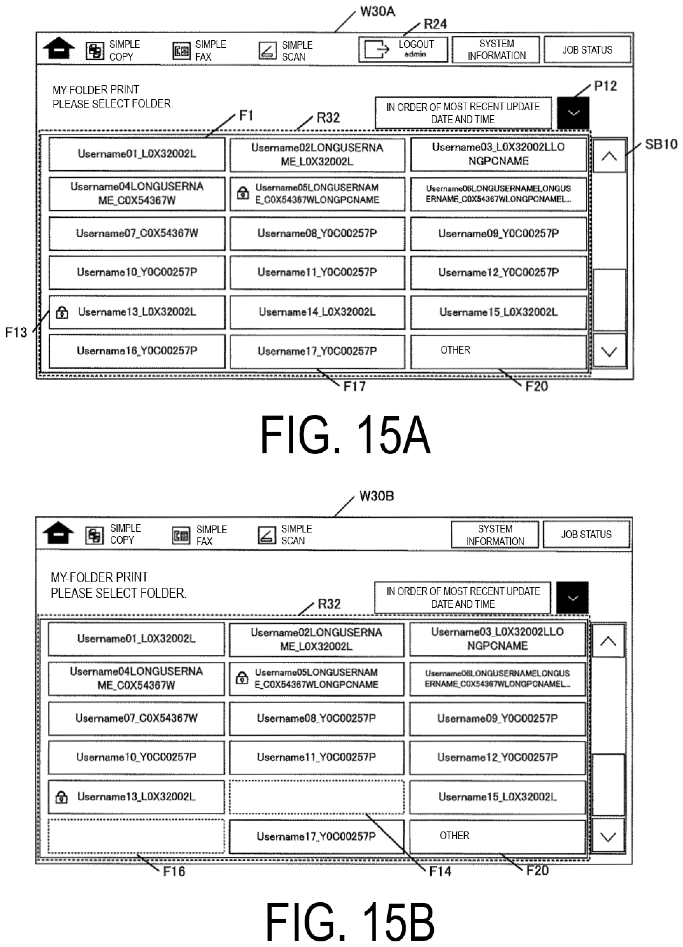

Next, an example of a display configuration of the my-folder print screen displayed by the controller 11 when the "my-folder print" shortcut key K10 is selected in the mode selection region R18 of the home screen W10 will be described with reference to FIGS. 15A and 15B. The my-folder print screen is a screen for receiving an instruction to select a my-folder that is a target of my-folder print.

FIG. 15A illustrates an example of a display configuration of the my-folder print screen W30A displayed by the controller 11 when the instruction to select the my-folder printing function is received (the "my-folder print" shortcut key K10 is selected) in step S340 of FIG. 7, and the type of authority of the user is the administrator authority.

The my-folder print screen W30A according to FIG. 15A includes a folder display region R32, a pull-down menu P12, a scroll bar SB10, and the logout button display region R24.

The folder display region R32 is a display area for displaying my-folders (F1, ..., F13, ..., F17) and another folder F20. In the my-folders (F1, ..., F13, ..., F17) illustrated in FIG. 15A, only some of the my-folders are denoted by reference signs for convenience of description in the drawing, and when the respective my-folders (F1, ..., F13, ..., F17) are not distinguished, the my-folders are simply referred to as a my-folder Fn.

Each my-folder Fn illustrated in FIG. 15A is formed in a substantially rectangular shape, and an example in which a folder name in which the user identification information 1031 and the device identification information 1033 are connected by an underscore (_) is displayed as a folder name (identifier) in a rectangular display area is illustrated. In FIG. 15A, each my-folder Fn is displayed in descending order of folder names.

Here, the my-folder F1 is given "Username01_L0X32002L" as a folder name, and the my-folder F17 displayed at an end position is given "Username17_Y0C00257P" as a folder name. That is, for example, the my-folder F1 indicates that this is the my-folder Fn in which print data owned by the user identified by a user name "Username01" as the user identification information 1031 and a computer name "L0X32002L" as the device identification information 1033 is stored. In addition to the folder name, for example, a lock mark (lock icon) requiring authentication information (password) for editing, viewing, or the like of the print data in the my-folder as shown in the my-folder F13 may also be displayed together in the my-folder Fn. When the type of authority of the user is the administrator authority, deletion of passwords for all the my-folders is possible (see FIG. 4B). Therefore, the user can delete the authentication information (password) for the my-folder with the lock mark as shown in the my-folder F13.

The other folder F20 illustrated in FIG. 15A is a folder for storing print data for which a my-folder cannot be automatically generated due to, for example, deficiency or absence of identification information. When the type of authority of the user is the administrator authority, a restriction setting related to "non-display setting when there is no print data in the my-folder is ON" is set to be disabled (see FIG. 4B), and therefore the controller 11 displays all my-folders Fn in the folder display region R32 regardless of the presence or absence of the print data to be stored.

The pull-down menu P12 is a pull-down menu for receiving the instruction to select a sorting rule (display order) of the my-folders Fn in the folder display region R32. FIG. 15A shows a state in which "descending order of update date and time" is selected as the sorting rule. When the instruction to select the sorting rule via the pull-down menu P12 is received from the login user, the controller 11 executes sorting processing for the my-folders Fn in the folder display region R32 based on the received sorting rule ("ascending order of update date and time", "descending order of update date and time", "ascending order of folder name", and "descending order of folder name"). In this case, the other folder F20 may be excluded from targets of the sorting processing.

The scroll bar SB10 indicates a current display position of the folder display region R32, and changes display positions of the my-folders Fn in the folder display region R32 in accordance with an upward and downward movement of a bar formed in a strip shape. FIG. 15A indicates that the scroll bar SB10 is positioned at a display position for displaying an end position (my-folder F17) of the my-folders Fn in the folder display region R32 and the other folder F20.

The logout button display region R24 is a display area for displaying a logout button for receiving a logout instruction from the multifunction peripheral 10, and has the same configuration as the logout button display region R24 displayed in the home screen W10 illustrated in FIG. 10. In the logout button display region R24, a user name "admin" of a login user with respect to the multifunction peripheral 10 is displayed in addition to the logout button. When the instruction to select the logout button is received, the controller 11 releases a login state of the login user and displays, for example, the home screen W10 illustrated in FIG. 10 or the my-folder print screen W30B illustrated in FIG. 15B on the display 13 (the operation inputter 15).

On the other hand, FIG. 15B illustrates an example of a display configuration of the my-folder print screen W30B displayed by the controller 11 when the instruction to select the my-folder printing function is received in step S340 of FIG. 7 (the "my-folder print" shortcut key K10 is selected), and the type of authority of the user is the user authority.

Since the display configuration of the my-folder print screen W30B illustrated in FIG. 15B is the same as that of the my-folder print screen W30A illustrated in FIG. 15A, description thereof is omitted here, but in FIG. 15B, the type of authority of the login user is the user authority, and therefore, the restriction setting related to "non-display setting when there is no print data in the my-folder is ON" is set to "empty folders are not displayed" (see FIG. 4B). Therefore, in FIG. 15B, the controller 11 sets a my-folder F14 "Username14_L0X32002L" and a my-folder F16 "Username16_Y0C00257P" having no print data not to be displayed.

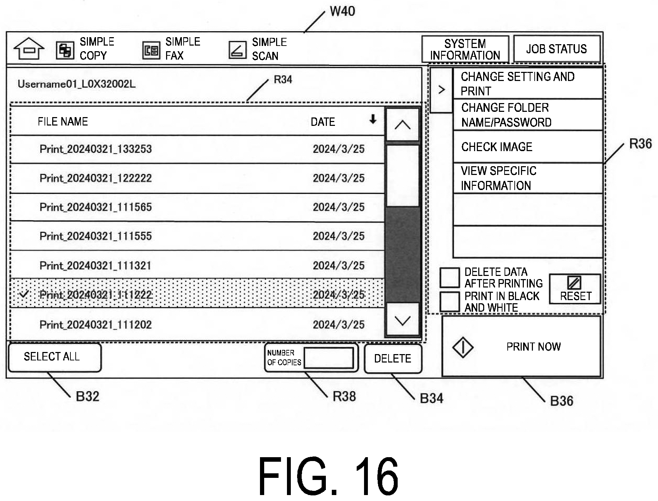

FIG. 16 is a diagram illustrating an example of a display configuration of a print data display screen W40 that is displayed by the controller 11 when the instruction to select the my-folder F1 illustrated in FIG. 15A is received.

The print data display screen W40 includes a print data display region R34, an operation selection region R36, a "select all" button B32, a number-of-copies input region R38, a "delete" button B34, and a "print now" button B36.

The print data display region R34 is a display area for displaying, in a list form, the print data stored in the my-folder F1. FIG. 16 illustrates an example in which seven pieces of the print data, from "Print_20240321_133253" to "Print_20240321_111202" are displayed as the print data stored in the my-folder F1 in an order in which the print data has been stored in the my-folder F1 (descending order). The print data display region R34 is configured so that print data to be executed as a print job can be selected, and FIG. 16 shows a state in which the print data "Print_20240321_111222" is selected by the user. The selected print data can be represented, as illustrated in FIG. 16, by a check mark indicating that the print data has been selected, or in a display color representing each piece of print data, which is different from that of other non-selected print data.

The operation selection region R36 is an area for displaying buttons for receiving selection of an operation instruction for each piece of the print data displayed in the print data display region R34 or an operation instruction related to the my-folder printing function. FIG. 16 illustrates an example in which input of an instruction to select a "change a setting and print" button, a "change folder name/password" button, a "check image" button, a "view detailed information" button, and the like as an operation instruction is possible. In addition, a "delete after print" checkbox for receiving an instruction to delete the print data after execution of a print job related to the print data, a "print in black and white" checkbox for receiving a black-and-white print instruction, a reset button for receiving an instruction to cancel the selection instruction on the print data display screen W40, and the like may be displayed together in the operation selection region R36.

The "select all" button B32 is a selection button for collectively receiving the instruction to select all print data stored in the my-folder F1. The number-of-copies input region R38 is an input area for receiving input of the number of print copies of the selected print data. Here, when a selection instruction is received from the user (for example, a touch operation), the number-of-copies input region R38 can display a numeric keypad and receive numeric input. In addition, the number-of-copies input region R38 is grayed out when no print data is selected, and even when a selection instruction is received from the user, a warning sound is emitted and an operation from the user is not received. On the other hand, after selection of the print data, a grayed-out state is released, and the number-of-copies input region R38 enters an active state in which operation can be received from the user. Further, in the number-of-copies input region R38, until the number of copies is changed by the numeric keypad, a value of [number of copies] is displayed as blank. The changed value of [number of copies] is maintained even when the selected print data is changed, but when no print data is selected, the display returns again to a grayed-out display. The "delete" button B34 is a selection button for receiving input of an instruction to delete selected print data.

The "print now" button B36 is a selection button for receiving a print execution instruction for selected print data. When the number of print copies is input to the number-of-copies input region R38 as necessary for the print data selected by the user and the instruction to select the "print now" button B36 is received, the controller 11 executes printing based on the print data. As illustrated in FIGS. 4A and 4B, when a setting value related to the number of print copies is associated with the job information area 101, if the instruction to select the "print now" button B36 is received without the number of print copies being input to the number-of-copies input region R38, printing is executed based on the number of print copies associated in the job information area 101. When the number of print copies is changed in the number-of-copies input region R38, printing is executed based on the changed number of print copies.

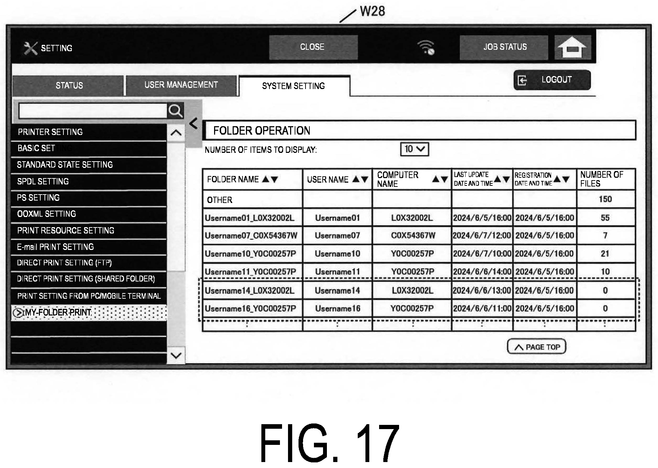

FIG. 17 illustrates an example in which my-folders Fn to be operated are displayed in a list on a file operation screen W28 of my-folder print. FIG. 17 illustrates an example in which a part of the my-folders Fn to be managed by the user whose type of authority is the administrator authority is displayed, and therefore the my-folder F14 "Username14_L0X32002L" and the my-folder F16 "Username16_Y0C00257P" having no print data (dotted-line frames in the drawing) are also displayed on the file operation screen W28 of the my-folder print as management (display) targets.

### [2 Second Embodiment]

A second embodiment describes a form in which the user authentication function for a user who uses the multifunction peripheral is set to be disabled in advance. In the second embodiment, when the user having the administrator authority is authenticated by the authenticator, the my-folder print setting screen is displayed, whereas when the "my-folder print" shortcut key K10 is selected in the mode selection region R18 of the home screen W10, the same my-folder print screen is displayed for any user.

Since a functional configuration according to the second embodiment can be the same as that of the first embodiment, description thereof is omitted here.

### [2.1 Flow of Processing]

### [2.1.1 Processing Related to Setting for Enabling My-Folder Function]

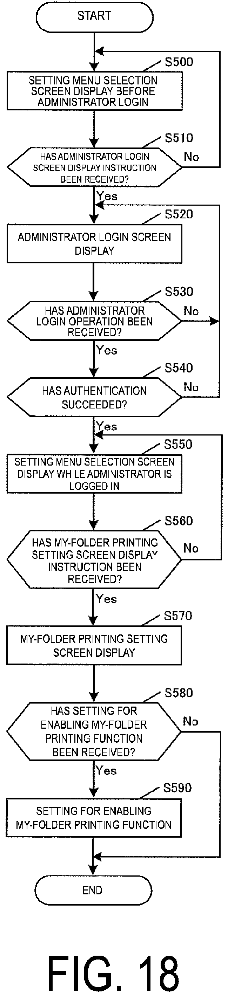

A flow of processing according to the second embodiment will be described. FIG. 18 is a flowchart illustrating a flow of processing from a state before the user (administrator) having the administrator authority logs in to the multifunction peripheral 10 until the my-folder printing function is set to be enabled. The processing described in the following flowcharts will be described as processing executed by the authenticator 23 and the controller 11 that has read the control program 251, the display control program 252, the job program 253 (the my-folder print program 2531), and the like.

The controller 11 displays the setting menu selection screen (before administrator login), for example, when the instruction to select the "setting" button or the like displayed in the function selection area of a home screen or the like is received (step S500).

The controller 11 determines whether an instruction to display the administrator login screen has been received from the user via the setting menu selection screen (step S510). When it is determined that the instruction to display the administrator login screen has been received, the controller 11 notifies the authenticator 23 that the display instruction has been received. The authenticator 23 that has received the notification displays the administrator login screen (step S510; Yes → step S520). When the controller 11 determines that the instruction to display the administrator login screen has not been received, the controller 11 continues display of the setting menu selection screen (step S510; No → step S500).

The authenticator 23 determines whether a login operation as an administrator by the user has been received via the administrator login screen (step S530). When it is determined that the login operation as an administrator by the user has been received, the authenticator 23 executes the authentication processing and determines whether the authentication of the user as an administrator has succeeded (step S530; Yes → step S540). On the other hand, when it is determined that the login operation as an administrator by the user has not been received (step S530; No), or when the authentication as the administrator has failed (step S540; No), the authenticator 23 continues the display of the administrator login screen (step S520).

When it is determined that the authentication of the user as an administrator has succeeded, the authenticator 23 notifies the controller 11 of the authentication result. The controller 11 that has received the notification displays the setting menu selection screen while the administrator is logged in (step S540; Yes → step S550).

Next, the controller 11 determines whether the instruction to display the my-folder print setting screen has been received via the setting menu selection screen while the administrator is logged in (step S560). When it is determined that the instruction to display the my-folder print setting screen has been received, the controller 11 displays the my-folder print setting screen (step S560; Yes → step S570). When it is determined that the instruction to display the my-folder print setting screen has not been received, the controller 11 continues display of the setting menu selection screen while the administrator is logged in (step S560; No → step S550).

The controller 11 determines whether an enable setting for enabling the my-folder printing function by the user has been received via the my-folder print setting screen (step S580). When it is determined that the enable setting for the my-folder printing function has been received, the controller 11 sets the my-folder printing function to be enabled and ends the processing (step S580; Yes → step S590). When the enable setting for the my-folder printing function has not been received, the controller 11 ends the processing (step S580; No).

### [2.1.2 Processing Related to Display of My-Folder Print Screen]

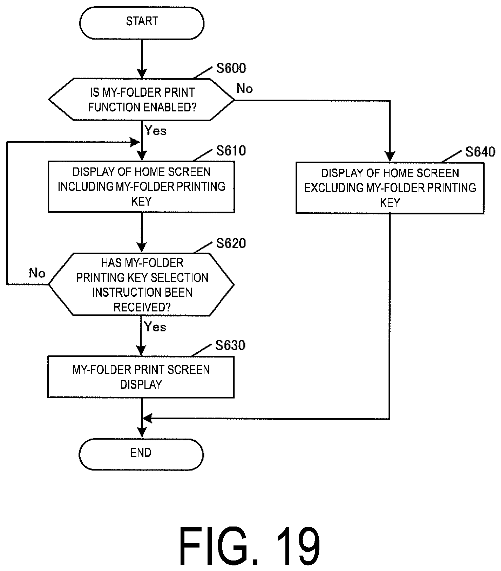

Next, processing related to display of the my-folder print screen will be described with reference to the flowchart of FIG. 19.

When home screen display processing is started, the controller 11 determines whether the my-folder printing function is set to be enabled (step S600). When it is determined that the my-folder printing function is set to be enabled, the controller 11 displays a home screen (for example, the home screen W10) including a my-folder print key (for example, the "my-folder print" shortcut key K10) for receiving the instruction to select the my-folder printing function (step S600; Yes → step S610). When the controller 11 receives an instruction to display the home screen, the controller 11 may determine the enabling/disabling of the my-folder printing function and reflect the determination result in a display form of the home screen.

Next, the controller 11 determines whether an instruction to select the my-folder print key from the user has been received (step S620). When it is determined that the instruction to select the my-folder print key has been received, the controller 11 displays the my-folder print screen and ends the processing (step S620; Yes → step S630). When it is determined that the instruction to select the my-folder print key has not been received, the controller 11 continues display of the home screen (step S620; No → step S610).

On the other hand, when it is determined in step S600 that the my-folder printing function is not set to be enabled, the controller 11 displays a home screen that does not include the my-folder print key, and ends the processing (step S600; No → step S640).

### [2.2 Operation Example]

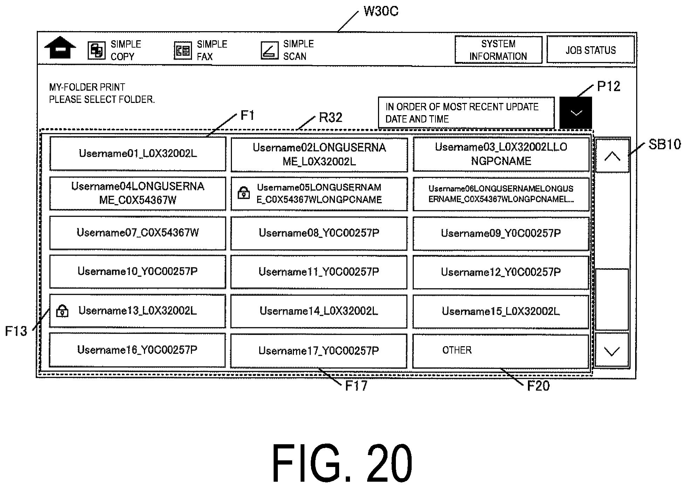

FIG. 20 is a diagram illustrating an example of a display configuration of the my-folder print screen displayed by the controller 11 when it is determined that an instruction to select the my-folder print key from the user has been received. Since a my-folder print screen W30C illustrated in FIG. 20 can have a configuration obtained by excluding the logout button display region R24 from the my-folder print screen W30A illustrated in FIG. 15A, description thereof is omitted here.

In the second embodiment, the my-folder print setting screen which is a setting screen for the my-folder printing function can be displayed only when the authentication of the user as an administrator has succeeded, whereas the my-folder print screen which is an execution screen of the my-folder printing function can be displayed by anyone as long as the my-folder printing function is set to be enabled. Thus, by allowing only the administrator to set the my-folder printing function and allowing anyone to execute the my-folder printing function regardless of the user, all users can use the my-folder printing function under settings intended by the administrator.

### [3 Third Embodiment]

A third embodiment describes a form in which the user authentication function for a user who uses the multifunction peripheral is set to be enabled in advance.

Since a functional configuration according to the third embodiment can be the same as that of the first embodiment, description thereof is omitted here.

### [3.1 Flow of Processing]

### [3.1.1 Processing of Displaying My-Folder Print Screen in Accordance with Type of Authority]

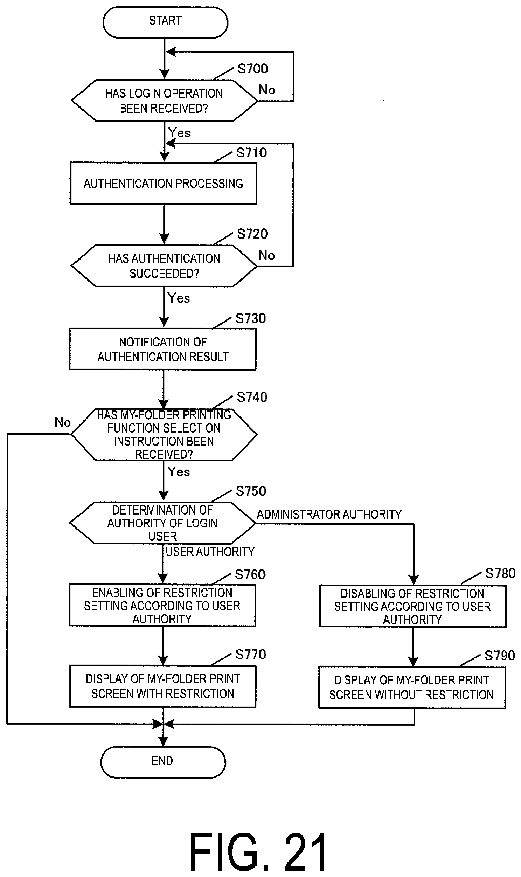

Next, processing of displaying the my-folder print screen in accordance with the type of authority will be described with reference to a flowchart of FIG. 21.

The authenticator 23 determines whether the login operation by the user as an operator has been received via an authentication screen to be described below, which is displayed on the display 13 (the operation inputter 15) (step S700). When it is determined that the login operation has been received, the authenticator 23 performs the authentication processing for the user (step S700; Yes → step S710). On the other hand, when it is determined that the login operation has not been received, the authenticator 23 waits until the login operation by the user is received (step S700; No).

The authenticator 23 performs the user authentication by comparing authentication information (login name, password, and the like) input via the authentication screen with the authentication information (login name, password, and the like) registered in advance in the user information management table 200 illustrated in FIG. 5. When it is determined that the authentication has succeeded, the authenticator 23 notifies the controller 11 of an authentication result (step S720; Yes → step S730). When it is determined that the authentication has failed, the authenticator 23 returns the processing of step S710 (step S720; No → step S710).

The controller 11 that has received a notification of an authentication result (authentication success) from the authenticator 23 determines, for example, whether an instruction to select (instruction to activate) the my-folder printing function has been received via the home screen or the like (step S740). When it is determined that the instruction to select (instruction to activate) the my-folder printing function has been received, the controller 11 determines, based on a notification result received in step S730, whether a type of authority of an authenticated user (login user) is the user authority or administrator authority (step S740; Yes → step S750). On the other hand, when it is determined that instruction to select (instruction to activate) the my-folder printing function has not been received, the controller 11 ends the processing (step S740; No).

When it is determined as a result of the authority determination in step S750 that the authority of the login user is the user authority, the controller 11 sets the restriction setting corresponding to the user authority to be enabled, displays the my-folder print screen with restrictions corresponding to the user authority, and ends the processing (step S750; "the user authority" → step S760 → step S770).

On the other hand, when it is determined that the authority of the login user is the administrator authority, the controller 11 sets the setting set to be enabled in the restriction setting corresponding to the user authority to be disabled, displays the my-folder print screen without the restrictions corresponding to the user authority, and ends the processing (step S750; "administrator authority" → step S780 → step S790).

### [3.2 Operation Example]

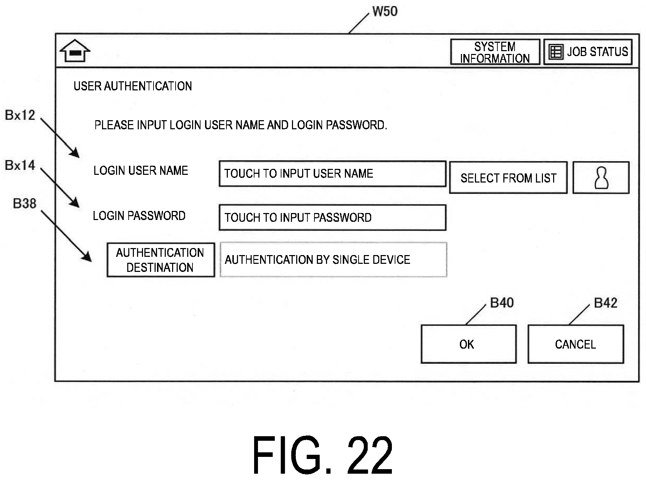

FIG. 22 is a diagram illustrating an example of a display configuration of a login screen W50 displayed on the display 13 (the operation inputter 15) by the authenticator 23.

The login screen W50 is an authentication screen for receiving input of authentication information related to the user authentication as the login operation, and when the user authentication function is enabled, the login screen W50 is displayed on the display 13 (the operation inputter 15), for example, when power of the multifunction peripheral 10 is turned on, when the multifunction peripheral 10 is in a standby state, or when the multifunction peripheral 10 is restored from a sleep state. Such a login screen W50 includes a login name input box Bx12, a password input box Bx14, an authentication destination selection button B38, an OK button B40, and a cancel button B42.

The login name input box Bx12 is an input box for receiving input of a login name of a user attempting to log in to the multifunction peripheral 10. The login name may be directly input using an input device such as a software keyboard (not shown) displayed on the display 13 (the operation inputter 15), or may be input by being selected from a user name list (not shown) displayed through selection of a selection button from a list.

The password input box Bx14 is an input box for receiving input of a password (login password) corresponding to the login name.

The authentication destination selection button B38 is a button for receiving an instruction to select an authentication destination related to the user authentication. The authentication destination may be set as the multifunction peripheral 10 alone, and when an external device providing an authentication function such as the authentication server is selected via the authentication destination selection button B38, authentication information input by the user via the login screen W50 may be transmitted to the authentication server, and authentication of the user may be performed in accordance with an authentication result received from the authentication server.

The OK button B40 is a button for receiving an instruction to confirm the authentication information input via the login screen W50. When the authenticator 23 receives an instruction to select the OK button B40, the authenticator 23 performs the user authentication based on the authentication information input via the login screen W50. On the other hand, the cancel button B42 is a button for receiving an instruction to cancel the authentication information input via the login screen W50. When the authenticator 23 receives an instruction to select the cancel button B42, the authenticator 23 discards the authentication information when authentication information has been input to the login name input box Bx12 and the password input box Bx14.

In the third embodiment, the form in which the user authentication function for a user who uses the multifunction peripheral is set to be enabled in advance has been described, but when the user authentication function is set, the my-folder printing function may be prevented from being set to be enabled.

The disclosure is not limited to the embodiments described above and can be modified in various ways. That is, embodiments obtained by combining appropriately modified technical means within the scope not departing from the gist of the disclosure are also included within the technical scope of the disclosure. Configurations of the disclosure sought to be patented are set forth in the appended claims, but configurations not recited in the claims are not intended to be excluded from the technical scope.

In the above-described specification, the descriptions "in a case in which ..." and "when ..." are described as examples, and the configuration is not limited to the described contents. Configurations not indicated by the descriptions "in a case in which ..." and "when ..." are also disclosed to the extent that the configurations are obvious to those skilled in the art, and the rights thereof are intended to be acquired.

The processing and the flow of data have been described herein in order, but the order thereof is not limited to the described order. For example, a configuration in which processing is partly removed or the order is rearranged is also disclosed, and the right thereof is intended to be acquired.

Further, although the above-described embodiments are described separately for convenience of description, it is obvious that the embodiments may be executed in combination within a technically possible scope.

Further, in the embodiments, a program operating on each device is a program that controls a CPU or the like (a program for causing a computer to function) to realize the functions of the above-described embodiments. Information handled by such a device is temporarily stored in a temporary storage device (for example, a RAM) during processing thereof and then stored in various storage devices such as read only memories (ROMs) and HDDs, and is read, modified, and written by the CPU as necessary.

Here, a computer-readable non-transitory recording medium on which a program is recorded in an information processing device may be any of a semiconductor medium (for example, a ROM or a non-volatile memory card), an optical recording medium/magnetic optical recording medium (for example, a digital versatile disc (DVD), magneto optical disc (MO), mini disc (MD), compact disc (CD), or Blu-ray (BD) (registered trademark) disc), a magnetic recording medium (for example, a magnetic tape or flexible disk), and the like. In this case, the program recorded on the recording medium is read by the computer of the information processing device and executed by the computer, such that not only the functions of the above-described embodiments but also functions of the disclosure are realized by performing processing in cooperation with an operating system, another application program, or the like based on instructions of the program.

Further, when a program is distributed in a market, the program can be stored in a portable recording medium and distributed, or can be transferred to a server computer connected through a network such as the Internet. In this case, it is obvious that a storage device of the server computer is also included in the disclosure.

Further, each functional block or feature of the device used in the above-described embodiments can also be implemented and executed by an electric circuit, for example, an integrated circuit or a plurality of integrated circuits. The electric circuit designed to realize the functions described herein may include a general-purpose processor, a Digital Signal Processor (DSP), an Application-Specific Integrated Circuit (ASIC), a Field Programmable Gate Array (FPGA), another programmable logic device, a discrete gate or transistor logic, a discrete hardware component, or a combination thereof. The general-purpose processor may be a microprocessor or may be a known processor, controller, microcontroller, or state machine. The electric circuit described above may include a digital circuit or an analog circuit. Further, when an integrated circuit technology for replacement into a current integrated circuit emerges with the development of semiconductor technology, a new integrated circuit based on the technology may also be used in one or more aspects of the disclosure.

### Reference Signs List

- 10: Multifunction peripheral
- 11: Controller
- 13: Display
- 15: Operation inputter
- 17: Communicator
- 19: Image former
- 21: Image inputter
- 23: Authenticator
- 25: Storage
- 251: Control program
- 252: Display control program
- 253: Job program
- 2531: My-folder print program
- 254: Folder storage area
- 255: User information storage area
- 50: PC

## Claims

1. An image forming apparatus (10) comprising a printing function of storing received print data in a folder generated based on identification information added to the print data and performing printing of the print data based on a print instruction from an operator, the image forming apparatus (10) comprising:
a storage (25) that stores type information of an authority of the operator with respect to the image forming apparatus (10); and
one or more controllers (11) that control an operation related to the printing function,
wherein the one or more controllers (11)
determine, based on the type information, whether a type of authority of the operator is user authority or administrator authority, and operate the printing function by setting a setting set to be enabled in a restriction setting corresponding to the user authority to be disabled when it is determined that the type of authority of the operator is the administrator authority.

2. The image forming apparatus (10) according to claim 1,
wherein, when the setting set to be enabled in the restriction setting is set to be disabled, the one or more controllers (11) receive an instruction to switch between enabling and disabling of the printing function.

3. The image forming apparatus (10) according to claim 1,
wherein, when the setting set to be enabled in the restriction setting is set to be disabled, the one or more controllers (11) receive an instruction to switch between display and non-display of the folder in which the print data is not stored.

4. The image forming apparatus (10) according to claim 1,
wherein another folder for storing the print data for which generation of the folder is not permitted is provided, and
the one or more controllers (11) receive an operation instruction for the print data stored in the other folder when the setting set to be enabled in the restriction setting is set to be disabled.

5. The image forming apparatus (10) according to claim 4,
wherein the operation instruction for the print data stored in the other folder includes a movement of the print data or change of detailed information of the print data.

6. The image forming apparatus (10) according to claim 4,
wherein the one or more controllers (11) display the other folder when the print data is not stored in the other folder.

7. The image forming apparatus (10) according to claim 1,
wherein the one or more controllers (11) receive an operation instruction for a password assigned to the folder when the setting set to be enabled in the restriction setting is set to be disabled.

8. The image forming apparatus (10) according to claim 7,
wherein the one or more controllers (11) receive an instruction to switch between enabling and disabling of prohibition of change of the password.

9. The image forming apparatus (10) according to claim 7,
wherein the one or more controllers (11) receive a password deletion instruction for the folder related to another operator.

10. The image forming apparatus (10) according to claim 1,
wherein the one or more controllers (11) receive backup and restore of the folder when the setting set to be enabled in the restriction setting is set to be disabled.

11. An image forming apparatus (10) comprising a printing function of storing received print data in a folder generated based on identification information added to the print data and performing printing of the print data based on a print instruction from an operator, the image forming apparatus (10) comprising:
a display (13);
an authenticator (23) that executes authentication processing of the operator with respect to the image forming apparatus (10); and
one or more controllers (11) that control an operation related to the printing function,
wherein the one or more controllers (11) display on the display (13) a setting screen related to a setting of the printing function when the operator having administrator authority is authenticated by the authenticator (23).

12. A control method for an image forming apparatus comprising a printing function of storing received print data in a folder generated based on identification information added to the print data and performing printing of the print data based on a print instruction from an operator, the control method comprising:
storing type information of an authority of the operator with respect to the image forming apparatus;
controlling an operation related to the printing function, and
determining a type of authority of the operator based on the type information, and operating the printing function by setting a setting set to be enabled in a restriction setting corresponding to the user authority to be disabled when it is determined that the type of authority of the operator is administrator authority.
